# EUROPEAN PATENT SPECIFICATION

(11) **EP 0 880 258 B1**
(45) Date of publication and mention of the grant of the patent: **29.07.2015**
(21) Application number: 98304101.3
(22) Date of filing: 22.05.1998
(51) Int. Cl.: H04M 3/30, H04B 3/46, H04M 3/22

(54) **Remote testing of a communications line**
Ferntesten von einer Kommunikationsleitung
Essai à distance d'une ligne de communication

(30) Priority: 22.05.1997 AU PO694997
(43) Date of publication of application: 25.11.1998
(73) Proprietor: TELETECH PTY LTD, Vermont Victoria 3313 (AU)
(72) Inventor: Wooding, Jeffrey, Parkdale, Victoria 3195 (AU)
(74) Representative: Fenlon, Christine Lesley

(56) References cited:
- EP-A- 0 287 369
- EP-A- 0 572 117
- US-A- 3 943 305
- US-A- 3 956 601
- US-A- 4 639 557
- US-A- 4 670 898

## Description

This invention relates to a method of, and apparatus for, remotely testing a communications line, and more particularly to a method of, and apparatus for, testing a communications line to ascertain its suitability, under high frequency transmissions, for transmitting data at high bit rates.

There is a need to conduct tests and perform measurements on a communications line, including a telephone line, such as the characteristics of line loss, noise and resistance. This is so that the line's suitability for high frequency digital systems like pair gain, basic rate ISDN and Internet connections can be established. Generally, at high frequencies, the loss in signal magnitude is much higher than at low frequencies. For example, at 100kHz, the line loss can be as much as 45 Db for a small pair gain system. This is primarily due to the increase in inductance on the line as frequency increases. A Plain Ordinary Telephone Service (POTs) line can often tolerate adverse transmission conditions caused by bridged taps, split pairs, poor joints and low insulation resistance. However, these conditions seriously affect the operation of high frequency digital systems and therefore must be identified.

Previously there has been no known method of measuring line loss and performing other measurements remotely from the receiving end of a communications line. One arrangement has consisted in setting up identical measuring instruments one at each end of the line under test. Each instrument is very expensive and furthermore, switching of the instruments between different functions to be measured has to be performed manually. There is also known Australian Patent No. 604878, in the name of the applicant, which discloses a system for remotely disconnecting and short-circuiting a pair of conductors. However, the system disclosed therein does not facilitate remotely switching between a plurality of measurement functions such that the required circuit elements to enable such measurement are connected to the communications line at both ends of the line, that is, the sender end and the receiver end.

The present invention provides for an apparatus for remotely measuring characteristics of a communications line including: receiver means for connection to a remote end of the communications line; sender means for connection to the other end of the communications line, said receiver means including a signal generator for generating a signal in use which is transmitted along the communications line toward the sender means said sender means having detection means for detecting said signal; and switching means; wherein: said signal is generated in response to a selection of one of a plurality of characteristics of said line to be measured, said signal uniquely representing said selected characteristic, such that on detection of said signal and, on the basis of the unique representation of the signal, the switching means is controlled so as to connect corresponding circuitry across the line at said other end; and wherein: in response to said selection of one of a plurality of characteristics of said line to be measured, in the receiver, a circuit corresponding to the selected characteristic is selected from a plurality of selectable circuits and connected across said remote end to enable the selected characteristic of the line to be measured.

Preferably, said signal is generated by signal generation means and is assigned a unique code, such as a sequence of pulses representing characteristics to be measured.

Preferably, when the signal is detected by said detection means, said signal is converted into a digital code and forwarded to a processing means, such as a microprocessor, which controls the switching means on the basis of the digital code representing the signal. Preferably, said switching means is in the form of a set of relays.

The present invention also provides for a method of remotely measuring characteristics of a communications line, including the steps of: connecting receiver means to a remote end of the communication line; connecting sender means to the other end of the communications line; causing the receiver means to generate a signal; transmitting said signal along the communications line toward the sender means; and detecting said signal through the sender means; wherein: said signal is generated in response to a selection of one of a plurality of characteristics of said line to be measured, said signal uniquely representing said selected characteristic; and including the step of, on the basis of the unique representation of the signal, controlling switching means to connect corresponding circuitry across the line at said other end and selecting a circuit from a plurality of circuits in the receiver for connection across the remote end of the communications line, corresponding to the selected one of a plurality of characteristics of said line to be measured to enable a selected characteristic of the line to be measured.

The invention will now be described in a preferred embodiment, by way of example only, with reference to the accompanying drawings wherein:
Figure 1 is a block diagram of a communications line having receiver unit and sender unit connected to each end of the line;
Figure 2 is a front view of the receiver unit panel;
Figure 3 is a block diagram showing an example of the operation of the sender unit in response to a signal being generated at the receiver unit;
Figure 4 is a block diagram of the internal circuitry of the receiver unit;
Figure 5 is a block diagram of circuitry required for a 3kHz loss measurement;
Figure 6 is a block diagram of circuitry required for an 820 Hz loss measurement;
Figure 7 is a block diagram of circuitry required for a 100kHz loss measurement;
Figure 8 is a block diagram of circuitry required to perform noise measurements on the communications line;
Figure 9 is a block diagram of circuitry required to detect split pairs of a communications line;
Figure 10 is a block diagram of a communications line set up to measure insulation resistance on the line;
Figure 11 is a block diagram of a communications line set up to measure loop resistance on the line;
Figure 12 is a block diagram of a communications line set up to measure DC voltage on the line;
Figure 13 shows circuitry in the sender unit and a probe unit at the other end of a communications line to identify pairs of conductors of the line; and
Figure 14 is a block diagram of an exchange through connection.

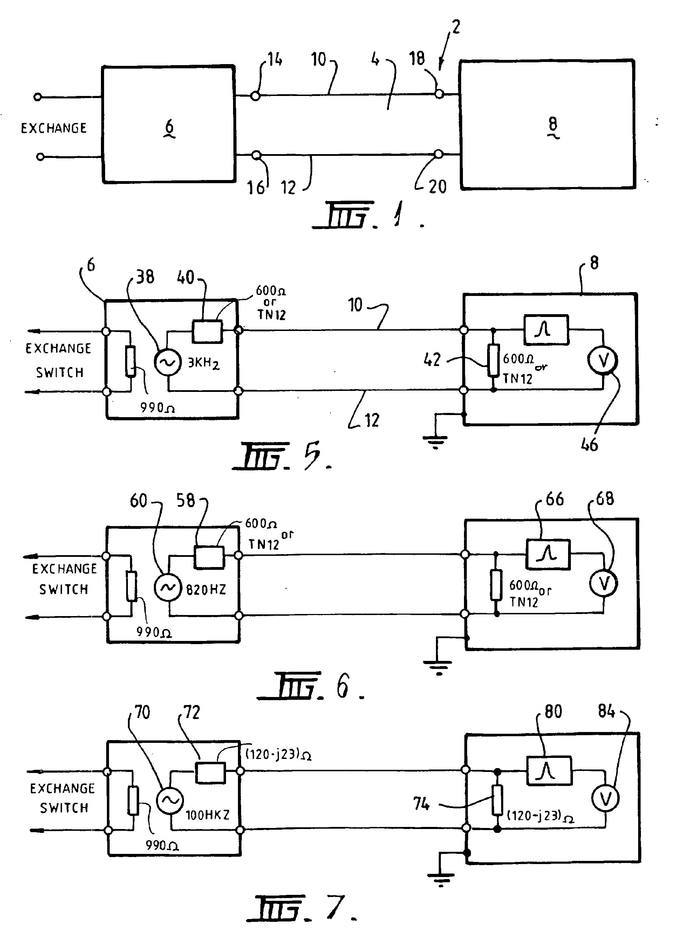

Figure 1 shows apparatus 2 for performing test measurements on a communications line 4 having conductors 10 and 12. At the exchange side of the line 4, sender means in the form of a sender unit 6 is connected between conductors 10 and 12 at terminals 14 and 16 and at the receiver end of line 4 is connected receiver means in the form of a receiver unit 8 at terminals 18 and 20. Alternatively the sender unit 6 can be connected across line 4 at a pillar or pit. Receiver unit 8 is used to display test results on line 4 and to remotely control the sender unit 4. Additionally a probe unit is used for identification of a pair of conductors of the line, to be described later. The apparatus 2 is able to connect and disconnect a short-circuit (strap). While the line 4 is short-circuited, the apparatus 2 may decode signals transmitted from receiver unit 8 to sender unit 6.

Apparatus 2 is able to perform a number of tests or measurements including the characteristics of line loss measurements at various frequencies, noise on the line 4, insulation resistance, loop resistance and DC voltage, all remotely from receiver unit 8. It also is capable of performing tests for split pairs of conductors using capacitance unbalance and pair identification and enables connection or disconnection of the conductors from the exchange. The pair identification and remote connection and disconnection is described in Australian Patent No. 604878.

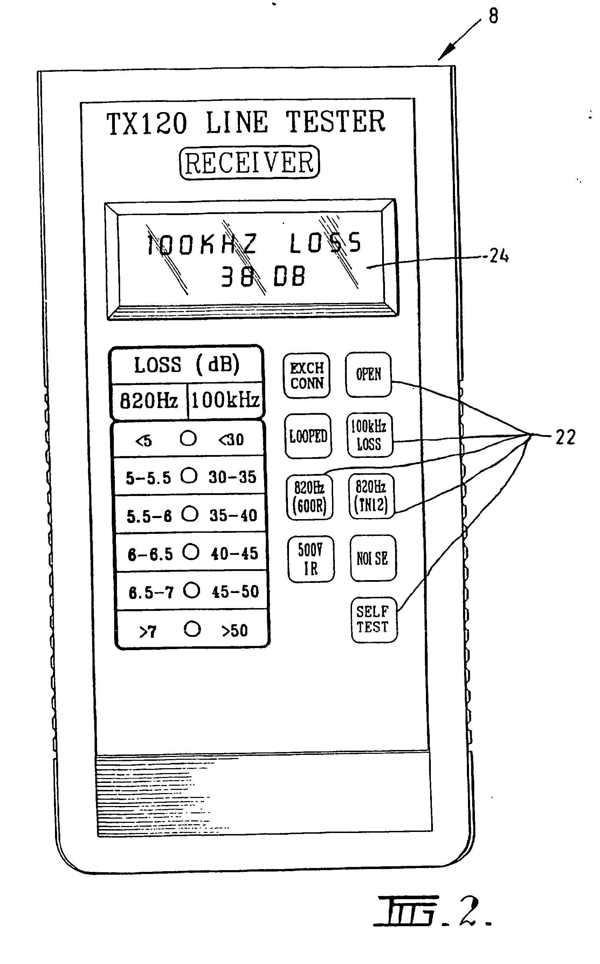

In Figure 2, there is shown a receiver unit 8 having function keys or buttons 22. The user may depress a particular key and the required function is switched into the line 4. The measured value is then displayed on the multi-character alpha-numeric LCD 24.

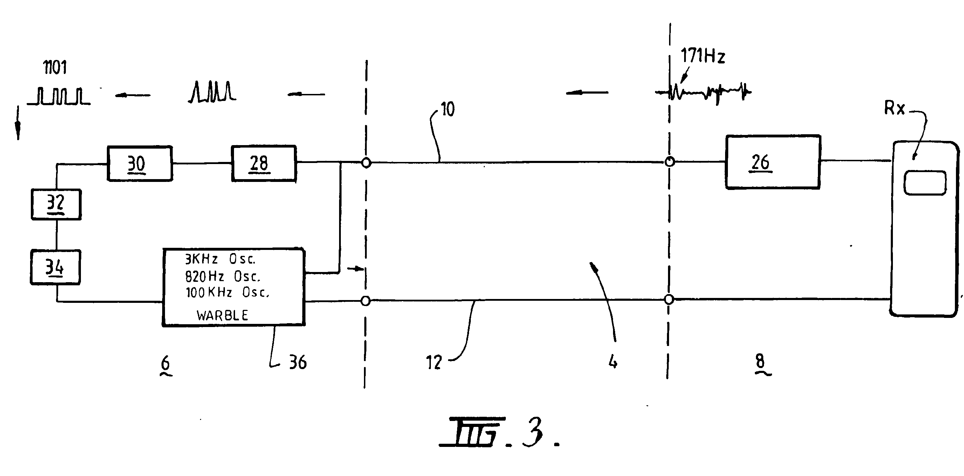

Figure 3 shows an example of the apparatus 2 in operation. With the sender unit 6 and receiver unit 8 connected at respective ends of communications line 4, the user at the receiver end may depress any required button 22 to perform a test on the line 4. In depressing a button 22, a signal is sent to a signal generator 26 which emits a coded series of pulses at 171 Hz, each coded series of pulses representing a signal for each test function. For example, to test for line loss at 100kHz, the signal may be represented by a sequence of two pulses, followed by no pulse and then one more pulse. This signal is transmitted over line 4 to sender unit 6 whereupon the signal is filtered by filter 28 and detected by detector means 30. The sequence is then converted or translated into the digital code 1101 and transmitted to processor means in the form of microprocessor 32 which directs or switches switching means 34 in the form of a bank of relays 34, such that the appropriate relay allows predetermined circuitry based on the code, to be connected between conductors 10 and 12 of line 4. In this example, code 1101 is for the 100 Khz oscillator. Therefore its relay is closed and the 100 Khz oscillator in sender section 36 is connected between the conductors 10 and 12.

It is to be noted that any other form of switching means may be used, such as those fabricated from semiconductors as is well known in the art.

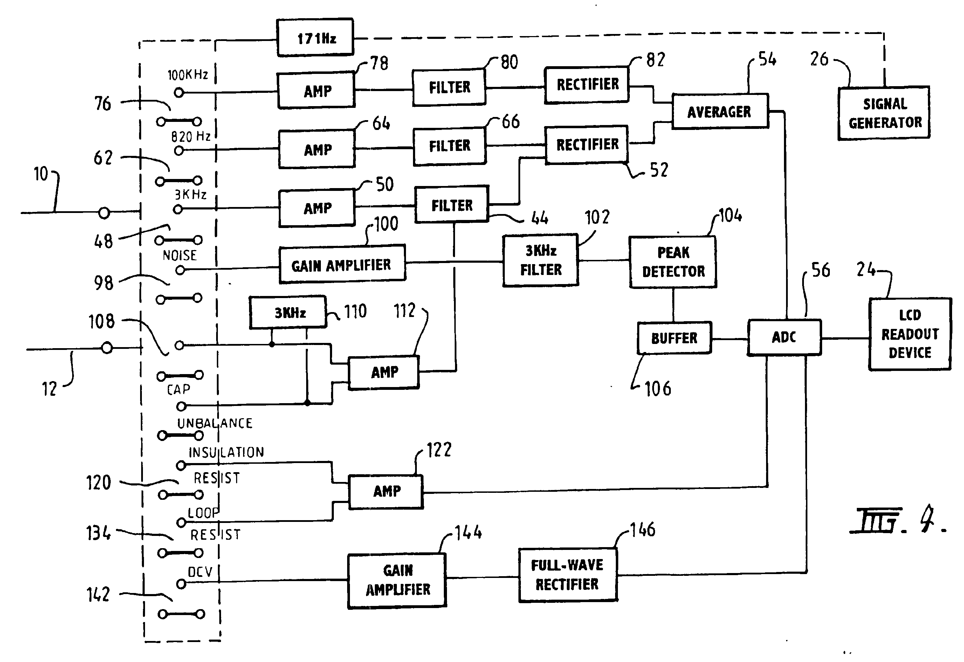

Connection to the conductors 10 and 12 of various circuit elements for each test function will now be described with reference to Figure 4.

In Figure 5 there is shown a circuit in which line 4 is being measured to determine a value for a 3 Khz loss. When a button 22 corresponding to a 3kHz loss measurement is depressed, the code is sent to the sender unit 6, as described previously, and the circuitry at section 36 is connected between the conductors 10, 12. Specifically, a 3 Khz oscillator 38 and a impedance 40 is connected, the impedance 40 being 600Ω or TN 12. The exchange side of the line 4 is "busied" by the insertion of a 990Ω resistor so that incoming calls are not connected through to line 4. In operation a 3 Khz, -10dBm sinusoidal signal is connected to the line at the sender and the receiver unit 8 measures the line loss. A 600Ω resistor or TN12 termination 42 is inserted between conductors 10 and 12 at the receiver unit 8. The sinusoidal signal is then switched by relay 48 through to amplifier 50, filter 44 and rectifier 52 before being averaged and passed onto analogue to digital converter (ADC) 56. Therefore, voltmeter 46 measures the signal magnitude and is converted to a decibel reading and output to LCD 24 of the receiver unit 8 so as to give a loss reading.

Similarly in Figure 6, to determine the loss on line 4 at 820Hz, the appropriate button 22 is pressed. At the sender unit 6, a 820Hz oscillator 60 and 600Ω or TN12 impedance 58 is connected between the conductors 10 and 12. An 820Hz, -10dBm sinusoidal signal is transmitted down the line 4 toward receiver unit 8 and the line loss measured. The signal is switched by relay 62, then amplified, filtered, rectified and averaged before passing on to ADC 56 for conversion into decibels from voltmeter 68.

In Figure 7 is shown a circuit arrangement for measuring less on line 4 at 100kHz. Again a corresponding button 22 is pressed, a signal generated by generator 26 and coded and transmitted to sender unit 6. A 100kHz oscillator 70 and complex impedance 72 having a value of (120-j23) Q is connected in the line 4 based on the assigned code. A 100kHz, 0 Dbm sinusoidal signal is sent down line 4. To minimize reflections on line 4 a matched impedance 74 having the same magnitude of impedance 72 is connected between conductors 10 and 12. This is after the signal has passed through relay 76, amplifier 78, filter 80, rectifier 82 and averager 54. The signal is then forwarded to ADC 56 after being read by voltmeter 84 and then converted to decibels to be read on LCD 24 as a loss at 100kHz.

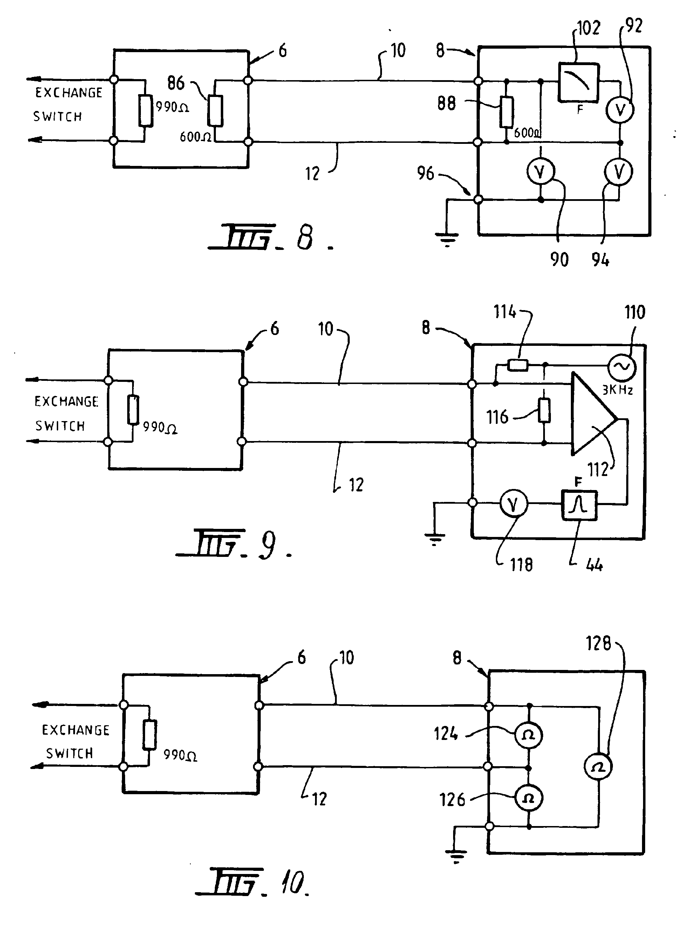

To measure the amount of noise on line 4, a 600Ω resistor 86 is connected between conductors 10 and 12 when the appropriate button is depressed on the receiver unit 8, as shown in Figure 8. A corresponding 600Ω resistor 88 is connected on the receiver side of line 4. The signal is switched through relay 98 before being amplified by gain amplifier 100. A 3 Khz filter 102 is applied to the signal resulting in a 3 Khz flat noise signal from which a measurement is taken after it is applied to a peak detector 104 and buffered. Voltmeters 90, 92 and 94 measure the received noise signal between the conductors 10 and 12 and between each conductor and ground. The readings from the voltmeters is then converted to decibels and applied to ADC 56 to be read out on LCD 24.

To detect split pairs, capacitive unbalance is measured on line 4. The line 4 is effectively open-circuited at the sender unit 6 as shown in Figure 9. The receiver unit 8 measures the capacitive unbalance of the conductors 10, 12 to ground through voltmeter 118. Relay 108 is closed to enable the receiver circuitry, wherein a 3 Khz oscillator 110 is fed to each input of amplifier 112 through appropriate impedances 114 and 116. The output of amplifier 112 is passed through filter 44 and then fed to the ADC 56 via rectifier 52 and averager 54. The LCD readout 24 displays the measured value.

To measure the insulation resistance on line 4, the sender unit 6 is connected to line 4 so that it is in the open-circuit condition as shown in Figure 10. Generally, insulation resistance is measured at high voltage, typically using a 500VDC source, as many of the digital systems mentioned previously are line powered by voltages up to 320VDC. Nothing is connected between the terminals in accordance with the specific code received by the sender in response to the IR button being depressed on the receiver unit 8. In the receiver unit, the insulation resistance is measured between the conductors 10 and 12 and between each conductor and ground via ohm meters 124, 126 and 128. The signals are then amplified by amplifier 122 and a digital readout of the measured values is shown on LCD 24. Each test performed by the receiver unit 8 is continued for about 20 seconds so as to allow enough time for weak insulation to fail. The line 4 is then discharged on completion of the test.

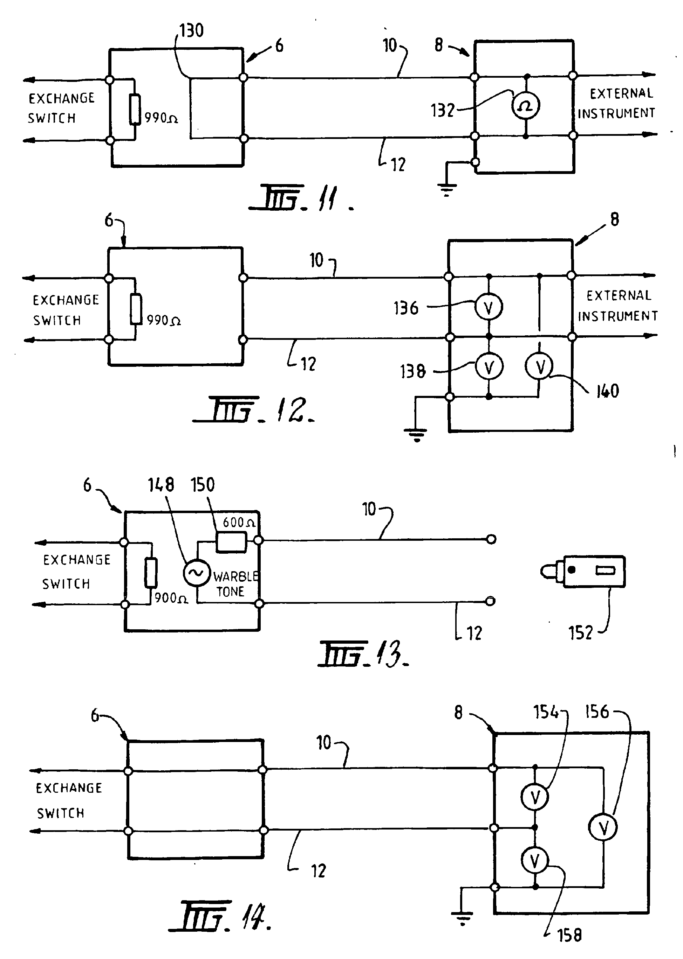

Figure 11 shows the apparatus set up to measure loop resistance on line 4. At the sender unit 6 the appropriate code is set to operate relay 134 such that the conductors 10 and 12 are short-circuited and therefore the line 4 is looped at 130. The loop resistance is measured by ohmmeter 132 and the signal amplified by amplifier 122 before being output to the LCD 24. In this loop mode, the receiver unit 8 may have terminals to facilitate the connection of external test instruments such as Pulse Echo Testers (PETs), Direct Reading Bridges and Multimeters. This enables calibration of the PETs and tests for finding bridge fault locations.

Furthermore, while the line 4 is short-circuited at the sender end, the sender unit 6 can still decode or detect the unique control signal transmitted by signal generator 26, which is representative of another characteristic of the line 4 to be measured. It does this by use of a current transformer which receives the signal whilst in this short-circuit mode of operation.

To measure DC voltage on line 4, the line is opened or isolated from the exchange and all sender unit circuitry, that is, it is put in an open-circuit condition. Voltages between the conductors 10 and 12, and between each conductor and ground are measured by voltmeters 136, 138 and 140, referring to Figure 12. The voltage signals are applied through relay 142 to gain amplifier 144 and full-wave rectifier 146, before being converted to digital form and read out on LCD 24. External instruments can also be connected to terminals on receiver unit 8.

Pair identification may be undertaken on telephone lines for the purpose of locating a fault or for installation of a telephone to be connected between a pair of lines. A warble tone oscillator 148 having a frequency between 2 and 3kHz is connected at the sender unit between the pair of conductors to be identified, as shown in Figure 13. A source impedance 150 of 600 ohms is also connected between the pair of conductors 10 and 12. The tone is sent down the line 4 and, at the remote end, a probe unit 152 is used to detect the tone which is converted to an audio output. The audio output indicates to the user that the correct pair of conductors is identified as having the loudest signal and the area of no signal, or null, is located midway between the conductors. The warble oscillator may be connected between the conductors either at the sender unit 6 or from the receiver unit 8 remotely. The frequency of the warble tone is adjustable so that two or three senders can be distinguished.

With reference to Figure 14, the conductors 10 and 12 are connected directly to the exchange and there is no 990 ohm resistor. The connection is again controlled by receiver unit 8 generating a suitable code to the sender unit 6 so that the conductors are directly connected to the exchange. The receiver unit 8 then is able to measure DC line voltages between the conductors 10 and 12 and between each conductor and ground through voltmeters 154, 156 and 158.

The sender unit 6, receiver unit 8 and probe unit 152 are each powered by 9V alkaline batteries. The sender unit can also be powered from the 48V to 52V DC exchange battery via standard MDF battery jacks. Power saving measures are employed to maximise the battery life. The receiver unit 8 switches off after a period of inactivity to conserve power.

## Claims

1. Apparatus for remotely measuring characteristics of a communications line (4) including:
receiver means (8) for connection to a remote end of the communications line (4);
sender means (6) for connection to the other end of the communications line (4), said receiver means (8) including a signal generator (26) for generating a signal in use which is transmitted along the communications line (4) toward the sender means (6) said sender means having detection means (30) for detecting said signal; and switching means (34);
wherein:
said signal is generated in response to a selection of one of a plurality of characteristics of said line to be measured; said signal uniquely representing said selected characteristic, such that on detection of said signal and, on the basis of the unique representation of the signal, the switching means (34) is controlled so as to connect corresponding circuitry across the line (4) at said other end; and wherein:
in response to said selection of one of a plurality of characteristics of said line to be measured, in the receiver, a circuit corresponding to the selected characteristic is selected from a plurality of selectable circuits and connected across said remote end to enable the selected characteristic of the line to be measured.

2. An apparatus as claimed in claim 1 further **characterised in that**: in response to detection of a suitable unique code the sender means (6) is controlled to directly connect the other end of the line to an exchange to enable a selected characteristic of the line to be measured by the receiver means.

3. Apparatus according to claim 1 wherein said signal includes a unique code representative of a characteristic of the line to be measured.

4. Apparatus according to claim 3 wherein said signal assigned a unique code is represented by a sequence of pulses at a signalling frequency.

5. Apparatus according to any one of the previous claims wherein, on detection by said detection means (30) of said signal, said signal is converted into a digital code.

6. Apparatus according to claim 5, further including processor means (32) for receiving and processing said digital code representing said signal.

7. Apparatus according to claim 6 wherein said switching means (34) is controlled by said processor means (32) to connect said predetermined circuitry on the basis of the particular code received and processed by said processor means.

8. Apparatus according to any one of the previous claims wherein said selection of one of a plurality of characteristics is made by depressing a respective button (22) on said receiver means (8).

9. Apparatus according to any one of the previous claims wherein said signal is a low frequency signal.

10. A method of remotely measuring characteristics of a communications line (4), including the steps of:
connecting receiver means (8) to a remote end of the communication line (4);
connecting sender means (6) to the other end of the communications line (4);
causing the receiver means (8) to generate a signal;
transmitting said signal along the communications line (4) toward the sender means (6); and
detecting said signal through the sender means (6);
wherein: said signal is generated in response to a selection of one of a plurality of characteristics of said line to be measured, said signal uniquely representing said selected characteristic;
and including the step of, on the basis of the unique representation of the signal,
controlling switching means (34) to connect corresponding circuitry across the line (4) at said other end and selecting a circuit from a plurality of circuits in the receiver for connection across the remote end of the communications line, corresponding to the selected one of a plurality of characteristics of said line to be measured to enable a selected characteristic of the line to be measured.

11. A method as claimed in claim 10 further **characterised in that** the method includes: detecting of a suitable unique code at the sender means (6); and in response to said code, directly connecting the other end of the line to an exchange to enable a selected characteristic of the line to be measured by the receiver means.

12. A method according to claim 10, further including the step of assigning a unique code to said signal after being generated at said receiver means (8) such that said unique code is representative of a characteristic of the line to be measured.

13. A method according to claim 12, further including representing said unique code as a sequence of pulses.

14. A method according to any one of claims 10 to 13 wherein said detecting step is conducted by detecting means (30) forming part of the sender means (6).

15. A method according to claim 14 wherein following the detecting step, said signal is converted into a digital code.

16. A method according to claim 15 wherein the controlling step is conducted by processor means (32) said processor means (32) receiving and processing the digital code representing said signal.

17. A method according to claim 16 wherein the switching means (34) is controlled by said processor means (32) to connect said predetermined circuitry on the basis of the digital code received and processed by said processor means.

18. A method according to any one of claims 10 to 17 further including depressing a respective button (22) on said receiver means (8) to enable said selection of one of a plurality of characteristics.

## Patentansprüche

1. Vorrichtung zur Fernmessung von Eigenschaften einer Kommunikationsleitung (4), aufweisend:
Empfängermittel (8) zur Verbindung mit einem entfernten Ende der Kommunikationsleitung (4);
Sendermittel (6) zur Verbindung mit dem anderen Ende der Kommunikationsleitung (4), wobei die Empfängermittel (8) einen Signalgenerator (26) zum Erzeugen eines Signals in Verwendung aufweisen, das auf der Kommunikationsleitung (4) in Richtung der Sendermittel (6) übertragen wird, wobei die Sendermittel Erfassungsmittel (30) zum Erfassen des Signals aufweisen; und Schaltmittel (34);
wobei:
das Signal als Reaktion auf eine Auswahl von einer aus einer Vielzahl von Eigenschaften der zu messenden Leitung erzeugt wird, wobei das Signal eindeutig die ausgewählte Eigenschaft dergestalt repräsentiert, dass bei Erfassung des Signals und auf der Basis der eindeutigen Darstellung des Signals, die Schaltmittel (34) so gesteuert werden, dass eine entsprechende Schaltungsanordnung über die Leitung (4) an dem anderen Ende verbunden wird; und wobei:
als Reaktion auf die Auswahl der einen aus einer Vielzahl von Eigenschaften der zu messenden Leitung in dem Empfänger, eine Schaltung, die der ausgewählten Eigenschaft entspricht, aus einer Vielzahl von auswählbaren Schaltungen ausgewählt wird und über das entfernte Ende verbunden wird, um die ausgewählte Eigenschaft der zu messenden Leitung zu aktivieren.

2. Vorrichtung nach Anspruch 1, des Weiteren **gekennzeichnet dadurch, dass**, als Reaktion auf das Erfassen eines geeigneten eindeutigen Codes, die Sendermittel (6) gesteuert werden, um das andere Ende der Leitung direkt mit einer Vermittlungsstelle zu verbinden, um eine ausgewählte Eigenschaft der durch die Empfängermittel zu messenden Leitung zu aktivieren.

3. Vorrichtung nach Anspruch 1, wobei das Signal einen eindeutigen Code repräsentativ für eine Eigenschaft der zu messenden Leitung aufweist.

4. Vorrichtung nach Anspruch 3, wobei das Signal, dem ein eindeutiger Code zugewiesen ist, durch eine Impulssequenz mit einer Signalfrequenz repräsentiert wird.

5. Vorrichtung nach irgendeinem der vorhergehenden Ansprüche, wobei das Signal bei Erfassung durch die Erfassungsmittel (30) zu einem digitalen Code umgewandelt wird.

6. Vorrichtung nach Anspruch 5, des Weiteren Prozessormittel (32) zum Empfangen und Verarbeiten des digitalen Codes aufweisend, der das Signal repräsentiert.

7. Vorrichtung nach Anspruch 6, wobei die Schaltmittel (34) durch die Prozessormittel (32) gesteuert werden, um die vorbestimmte Schaltungsanordnung auf der Basis des bestimmten Codes zu verbinden, der von den Prozessormitteln empfangen und verarbeitet wird.

8. Vorrichtung nach irgendeinem der vorherigen Ansprüche, wobei die Auswahl einer aus einer Vielzahl von Eigenschaften durch Drücken einer jeweiligen Taste (22) auf den Empfängermitteln (8) erfolgt.

9. Vorrichtung nach irgendeinem der vorherigen Ansprüche, wobei das Signal ein Niederfrequenzsignal ist.

10. Verfahren zur Fernmessung von Eigenschaften einer Kommunikationsleitung (4), die folgenden Schritte aufweisend:
Verbinden der Empfängermitteln (8) mit einem entfernten Ende der Kommunikationsleitung (4);
Verbinden der Sendermitteln (6) mit dem anderen Ende der Kommunikationsleitung (4);
Bewirken, dass die Empfängermittel (8) ein Signal erzeugen;
Übertragen des Signals auf der Kommunikationsleitung (4) in Richtung der Sendermittel (6); und
Erfassen des Signals über die Sendermittel (6);
wobei das Signal als Reaktion auf eine Auswahl einer aus einer Vielzahl von Eigenschaften der zu messenden Leitung erzeugt wird, wobei das Signal eindeutig die ausgewählte Eigenschaft repräsentiert;
und den Schritt aufweisend, auf der Basis der eindeutigen Repräsentation des Signals, des Steuerns der Schaltmittel (34), um eine entsprechende Schaltungsanordnung über die Leitung (4) an dem anderen Ende zu verbinden, und des Auswählens einer Schaltung aus einer Vielzahl von Schaltungen in dem Empfänger zur Verbindung über das entfernte Ende der Kommunikationsleitung, entsprechend der einen ausgewählten Eigenschaft aus einer Vielzahl von Eigenschaften der zu messenden Leitung, um eine ausgewählte Eigenschaft der zu messenden Leitung zu aktivieren.

11. Verfahren nach Anspruch 10, des Weiteren **dadurch gekennzeichnet, dass** das Verfahren aufweist: Erfassen eines geeigneten eindeutigen Codes an den Sendermitteln (6); und als Reaktion auf den Code, direktes Verbinden des anderen Endes der Leitung mit einer Vermittlungsstelle, um eine ausgewählte Eigenschaft der durch die Empfängermittel zu messenden Leitung zu aktivieren.

12. Verfahren nach Anspruch 10, des Weiteren den Schritt des Zuweisens eines eindeutigen Codes zu dem Signal aufweisend, nachdem es an den Empfängermitteln (8) erzeugt wurde, so dass der eindeutige Code eine Eigenschaft der zu messenden Leitung repräsentiert.

13. Verfahren nach Anspruch 12, des Weiteren das Repräsentieren des eindeutigen Codes als eine Impulssequenz aufweisend.

14. Verfahren nach irgendeinem der Ansprüche 10 bis 13, wobei der Erfassungsschritt durch Erfassungsmittel (30) ausgeführt wird, die Bestandteil der Sendermittel (6) sind.

15. Verfahren nach Anspruch 14, wobei das Signal, auf den Erfassungsschritt folgend, in einen digitalen Code umgewandelt wird.

16. Verfahren nach Anspruch 15, wobei der Steuerschritt durch Prozessormittel (32) ausgeführt wird, wobei die Prozessormittel (32) den digitalen Code, der das Signal repräsentiert, empfangen und verarbeiten.

17. Verfahren nach Anspruch 16, wobei die Schaltmittel (34) durch die Prozessormittel (32) gesteuert werden, um die vorbestimmte Schaltungsanordnung auf der Basis des digitalen Codes zu verbinden, der von den Prozessormitteln empfangen und verarbeitet wird.

18. Verfahren nach irgendeinem der Ansprüche 10 bis 17, des Weiteren das Drücken einer jeweiligen Taste (22) auf den Empfängermitteln (8) aufweisend, um die Auswahl einer aus einer Vielzahl von Eigenschaften zu aktivieren.

## Revendications

1. Appareil pour mesurer à distance des caractéristiques d'une ligne de communication (4), comprenant :
des moyens de réception (8) pour connexion à une extrémité éloignée de la ligne de communication (4) ; des moyens d'émission (6) pour connexion à l'autre extrémité de la ligne de communication (4), les moyens de réception (8) comprenant un générateur de signaux (26) pour engendrer en fonctionnement un signal qui est transmis sur la ligne de communication (4) aux moyens d'émission (6), les moyens d'émission (6) ayant des moyens de détection (30) pour détecter ledit signal ; et des moyens de commutation (34) ;
**caractérisé en ce que** :
le signal est engendré en réponse à une sélection de l'une parmi une pluralité de caractéristiques à mesurer de ladite ligne, le signal représentant uniquement ladite caractéristique sélectionnée, de façon que, après détection dudit signal et sur la base de la représentation unique du signal, les moyens de commutation (34) sont activés afin de connecter un circuit correspondant par la ligne (4) à l'autre extrémité ; et **en ce que**, en réponse à ladite sélection de l'une parmi une pluralité de caractéristiques à mesurer de ladite ligne, dans le récepteur, un circuit correspondant à la caractéristique sélectionnée est choisi parmi une pluralité de circuits pouvant être choisis et connecté par l'extrémité éloignée afin de rendre possible de mesurer la caractéristique sélectionnée de la ligne.

2. Appareil selon la revendication 1, **caractérisé en outre en ce que**, en réponse à la détection d'un code unique approprié, les moyens d'émission (6) sont activés afin de connecter l'autre extrémité de la ligne directement à un échangeur pour permettre à une caractéristique sélectionnée de la ligne d'être mesurée par les moyens de réception.

3. Appareil selon la revendication 1, **caractérisé en ce que** le signal comporte un code unique représentant une caractéristique à mesurer de la ligne.

4. Appareil selon la revendication 3, **caractérisé en ce que** le signal auquel est attribué un code unique, est représenté par une suite d'impulsions à une fréquence de signalisation.

5. Appareil selon l'une quelconque des revendications précédentes, **caractérisé en ce que**, après détection du signal par les moyens de détection (30), le signal est transformé en un code digital.

6. Appareil selon la revendication 5, comprenant en outre des moyens de traitement (32) pour recevoir et traiter le code digital représentant ledit signal.

7. Appareil selon la revendication 6, **caractérisé en ce que** les moyens de commutation (34) sont activés par les moyens de traitement (32) afin de connecter ledit circuit prédéterminé sur la base du code particulier reçu et traité par les moyens de traitement.

8. Appareil selon l'une quelconque des revendications précédentes, **caractérisé en ce que** la sélection de l'une parmi une pluralité de caractéristiques est effectuée par appui sur un bouton correspondant (22) sur les moyens de réception (8).

9. Appareil selon l'une quelconque des revendications précédentes, **caractérisé en ce que** le signal est un signal basse fréquence.

10. Procédé de mesurer à distance des caractéristiques d'une ligne de communication (4), comprenant les étapes de :
connecter des moyens de réception (8) à une extrémité éloignée de la ligne de communication (4) ; connecter des moyens d'émission (6) à l'autre extrémité de la ligne de communication (4) ; faire les moyens de réception (8) engendrer un signal ; transmettre le signal sur la ligne de communication (4) aux moyens d'émission (6) ; et détecter ledit signal par les moyens d'émission (6) ;
**caractérisé en ce que** : le signal est engendré en réponse à une sélection de l'une parmi une pluralité de caractéristiques à mesurer de ladite ligne, le signal représentant uniquement ladite caractéristique sélectionnée ;
et comprenant l'étape de, sur la base de la représentation unique du signal, activer des moyens de commutation (34) afin de connecter un circuit correspondant par la ligne (4) à l'autre extrémité et sélectionner un circuit parmi une pluralité de circuits dans le récepteur pour connexion par l'extrémité éloignée de la ligne de communication, correspondant à la caractéristique sélectionnée parmi une pluralité de caractéristiques de la ligne à mesurer, afin de rendre possible de mesurer une caractéristique sélectionnée de la ligne.

11. Procédé selon la revendication 10, **caractérisé en outre en ce que** le procédé comprend : détecter un code unique approprié aux moyens d'émission (6) ; et, en réponse à ce code, connecter l'autre extrémité de la ligne directement à un échangeur afin de permettre à une caractéristique choisie de la ligne d'être mesurée par les moyens de réception.

12. Procédé selon la revendication 10, comprenant en outre l'étape d'attribuer un code unique audit signal après avoir été engendré dans les moyens de réception (8) de façon que le code unique représente une caractéristique à mesurer de la ligne.

13. Procédé selon la revendication 12, comprenant en outre de représenter le code unique comme une suite d'impulsions.

14. Procédé selon l'une quelconque des revendications 10 à 13, **caractérisé en ce que** l'étape de détection est mise en oeuvre par des moyens de détection (30) faisant partie des moyens d'émission (6).

15. Procédé selon la revendication 14, où, après l'étape de détection, le signal est transformé en un code digital.

16. Procédé selon la revendication 15, **caractérisé en ce que** l'étape d'activation est mise en oeuvre par des moyens de traitement (32), les moyens de traitement (32) recevant et traitant le code digital représentant le signal.

17. Procédé selon la revendication 16, **caractérisé en ce que** les moyens de commutation (34) sont activés par les moyens de traitement (32) afin de connecter ledit circuit prédéterminé sur la base du code digital reçu et traité par les moyens de traitement.

18. Procédé selon l'une quelconque des revendications 10 à 17, comprenant en outre appuyer sur un bouton correspondant (22) sur les moyens de réception (8) afin de permettre la sélection de l'une parmi une pluralité de caractéristiques.
